(19) Europäisches Patentamt
European Patent Office
Office européen des brevets

(11) EP 3 514 206 A1

(12) **EUROPEAN PATENT APPLICATION**

(43) Date of publication:
**24.07.2019 Bulletin 2019/30**

(21) Application number: **18152573.4**

(22) Date of filing: **19.01.2018**

(51) Int Cl.:
***C09D 5/03*** *(2006.01)* ***C08G 63/21*** *(2006.01)*
***C08G 63/52*** *(2006.01)* ***C08G 63/676*** *(2006.01)*
***C08G 63/685*** *(2006.01)* ***C08G 63/688*** *(2006.01)*
***C08G 63/692*** *(2006.01)* ***C08G 63/78*** *(2006.01)*
***C09D 167/06*** *(2006.01)* ***C09D 167/07*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **TIGER Coatings GmbH & Co. KG**
**4600 Wels (AT)**

(72) Inventors:
- **HINTERSTEINER, Ingrid**
**4600 Wels (AT)**
- **WEIGL, Sabrina**
**4600 Wels (AT)**

(74) Representative: **Sonn & Partner Patentanwälte**
**Riemergasse 14**
**1010 Wien (AT)**

(54) **THERMOPLASTIC**

(57) The present invention relates to a thermoplastic, unsaturated semi-crystalline polyester (A) with a Mp of 35°C or above comprising allyl functional groups of formula 1

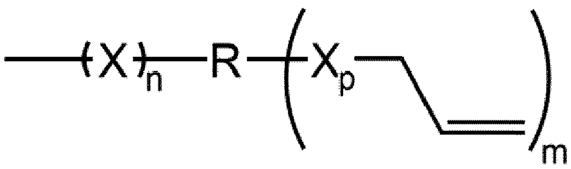
,

wherein X is selected from O, N, S and/or P, the value of n is 1 to 4, preferably 1 or 2, the value of p is 0 or 1, R is a substituted or unsubstituted aromatic, aliphatic or cycloaliphatic carbon chain with a number of carbon atoms from 0 to 10, preferably from 2 to 6, and m is at least 1, preferably between 1 and 3, said polyester (A) having a melt viscosity at 130°C below 5 Pas, preferably below 3, more preferably below 1,5 Pas, the polyester (A) containing compounds supporting crystallinity wherein the mass fraction of compounds supporting crystallinity based on the mass of the polyester obtained from the synthesis is more than 70%, preferably more than 80%, more preferable more than 90% and most preferably more than 100%. The invention also relates to a process for the production of such a polyester (A) as well as to powder coating composition comprising at least one of such polyester (A).

EP 3 514 206 A1

## Description

The present invention relates to a thermoplastic, unsaturated semi-crystalline polyester (A) with a Mp of 35°C or above comprising allyl functional groups, a process for the production of such a polyester (A), use of such a polyester (A) in a binder system of a powder coating composition and a powder coating composition comprising at least one thermoplastic polyester (A) and at least one thermoplastic amorphous polymer (B) comprising ethylenic unsaturations, wherein polyester (A) and polymer (B) can copolymerize with each other.

In contrast to solvent based coatings, powder coatings are a very environmentally friendly kind of a coating material. In particular, the nearly complete degree of material utilization, the freedom from VOC content, and its simple application are leading to an increase in the market share of powder coatings. However, due to the relatively high baking temperature of typically between 150 and 200°C, the coating of heat-sensitive substrates with powder coatings presents a technological challenge.

Heretofore, accelerated epoxy/polyester powder coatings (hybrid powder coatings) have usually been employed for the coating of heat-sensitive substrates which are characterized by low baking temperatures and a markedly improved UV resistance compared to epoxy resin powder coatings. However, the lowest curing temperatures that can be achieved with such systems are around 130 °C because lower curing temperatures would lead to insufficient storage stability caused by high concentrations of curing catalysts. Apart from the mentioned hybrid formulations, radically curing systems have been employed both currently and in the past. For these systems, only minor amounts of crystalline or partially crystalline resins are recommended in the state of the art, in particular because a homogeneous mixing of such resins with amorphous resins turns out to be difficult due to clearly varying melt viscosities. In addition, due to a strong viscosity reduction and a subsequent inviscidity as a result of using crystalline resins, the edge coverage may turn out to be insufficient if a too high concentration of crystalline resin(s) is used.

There are a few documents which suggest (partially oligomeric) vinyl or allyl ether urethanes in combination with unsaturated polyesters for the coating of temperature sensitive substrates with radically curing powder coatings, such as EP 2 342 286 B1, WO 2010/052290 A1, EP 2 342 287 A1, WO 2014/173861, and WO 1993/019132. Even though the group of vinyl ether urethanes, in particular, may undergo very fast polymerization reactions with unsaturated polyesters, which makes it well suited for low temperature applications in the field of powder coatings, the highly restricted commercial availability of this group constitutes a great disadvantage. Technical further developments of potential powder coatings are thus limited.

There is a limited number of documents of the prior art for systems, comprising the commercially more widely available and more strongly pre-polymerized allyl prepolymers. Disadvantageous of them are the higher curing temperatures described in the literature, which are required due to their substantially higher molar mass and the higher viscosity associated with it.

EP 0 309 088 B1 describes a powder composition for an in-mold process, including at least one unsaturated polyester and at least one copolymerizable second resin, as well as an amount of an initiator sufficient to crosslink the mixture which in turn consists of a mixture of a rapid and a slow initiator. EP 1 043 138 A1 relates to thermosetting resins for use as a surface coating of glass fiber reinforced molded articles in the mold wherein the resins are in powder form. The systems described in these two disclosures are aimed at making use of the powderin-mold-coating (PIMC) process. The powder is applied to the surface of the mold preferably when the surface of the mold is sufficiently hot to cause melting of the powder particles and to partially cure the film resulting from this. Thereafter, the mold coated like this is filled with a fluid, thermally curing filling resin with or without a glass fiber reinforcement. The combined curing of the coating and the filling resin is effected under applied pressure (in a press). Even though lower curing temperatures can be reached hereby, compared to conventional powder coating systems, these are still in a temperature range with lower curing temperatures of about 150°C which is clearly too high for heat-sensitive substrates. In addition, flowing and leveling, i.e. the melting viscosity, does not play a role in PIMC, resulting in far higher coating thicknesses. Furthermore, for the curing process a pressure is applied which is not the case in powder coatings and is even undesirable. As is known from prior art, atmospheric oxygen may inhibit the curing process at the surface of radically cured coatings which results in soft surfaces. This is not relevant in PIMC due to curing in a press under pressure (closed system), whereas in powder coating this aspect comes into particular effect. Ultimately, aesthetic properties of the obtained coating are of no relevance in PIMC.

US 3 331 891 describes a composition in powder form, comprising allyl prepolymers and unsaturated polyesters, with thermal curing. Hereby, the number average molar mass of the allyl prepolymer is maximally 25,000 g/mol, and per 100 parts of the allyl prepolymer, and there will be included 5 to 50 parts of an unsaturated polyester having a melting point of between 35 and 120°C, and a maximum of 10 parts of a diallyl phthalate monomer. In addition, the composition includes a polymerization catalyst. Despite this polymerization catalyst, curing temperatures ranging from 150-160°C are still required for this composition in order to achieve an adequate crosslinking of this system. The compositions disclosed in this document do not enable the coating of temperature-sensitive substrates, and the high baking temperatures for the coatings stated in the examples result in particular from the high proportion of diallyl phthalate prepolymer

of at least two third based on the binding agent and from the high viscosity in the system caused by this. Further, the employed polyester is not focussed on viscosity lowering, semi-crystalline resins, and therefore no viscosity reduction can be achieved even with the addition of this component.

EP 0 844 286 A1 refers to a powder coating composition having a dual curing mechanism, comprising a resin with reactive unsaturated groups, such as unsaturated polyesters, unsaturated polyacrylates, unsaturated polymethacrylates, or mixtures thereof, a copolymerizable second resin having either a vinylester group, an acrylate group, a methacrylate group, an allylester group, or mixtures thereof, together with a photoinitiator and a thermal initiator. EP 0 980 901 A2 and EP 1 538 186 A1 both describe radically curing systems with UV initiation. Both systems might not appropriate for three-dimensional substrate geometries; in such cases, a thermal iniation system might be preferred

EP 0 957 141 B1 describes a 2K system containing in the first component an unsaturated polyester and a free radical initiator and in the second component a polymerization accelerator. However, in a further document (WO 2015/158587), based on a 2K system with a vinylether urethane crosslinker for curing, the properties of the system described in EP 0 957 141 B1 which is based on allyl prepolymers, are described as being inadequate with respect to storage stability, extrudability, and swelling capacity.

CN 102884132 A and EP 2 566 923 A1 describe a heat curable powder coating composition, comprising at least one crystalline polyester resin and at least one amorphous polyester resin, at least one curing agent and at least one thermal radical starter, wherein the at least one crystalline polyester resin and/or the at least one amorphous polyester resin have/has diacid ethylenical unsaturations, the at least one curing agent is either crystalline or amorphous, and the at least one curing agent has reactive unsaturations, which can be crosslinked with the ethylenic double bonds of the diacid ethylenical unsaturations of the at least one crystalline polyester resin and/or the at least one amorphous polyester resin. Hereby, as the curing agent is molecular or oligomeric (low molar mass) it may migrate to the surface during film formation or storage, and consequently during its usage as well. Within the scope of a few experiments, this effect of "blooming" of low molecular compounds could be shown for powder coating compositions, and besides, this effect constitutes a problem known in the prior art.

To sum up, coating compositions for heat sensitive substrates should have a very low viscosity at low curing temperatures on the one hand, enabling a good flow, meaning a smooth surface appearance, and levelling. On the other hand, the storage stability of such coating compositions must not suffer. Furthermore, the curing reaction must take place very fast, already at low temperatures, which means that conventional curing mechanisms such as a polyaddition and a polycondensation cannot be used, as they would require too high amounts of catalyst, which would in turn lead to chemical pre-reactions during storage. It proved to be very difficult to combine the aspects of low viscosity, high reactivity and storage stability, this is often observed for highly reactive binders used in powder coating compositions, as the binders often show very low glass transition temperatures and thus undergo either chemical pre-reactions or suffer from caking at storage conditions. Also, difficulties in terms of processing (sticking to cooling roller, cooling belt, mill) were encountered with compositions of the state of the art.

Allylic polyesters are known from UV curing to give superior coating properties; however, only amorphous polyesters containing allylic functionalities have so far been described.

It is an object of the present invention to overcome the disadvantages of the stated prior art with regard to powder coating formuations in terms of baking temperatures which are too high for heat-sensitive substrates, problems associated with insufficient curing by UV or dual curing, as well as inadequate storage stability, poor resistance to cold liquids or a deficient flexibility. Flexibility within the meaning of this is invention is shown by the long-term crack resistance or also known as swelling capacity assessed with the Ledro Test based on IKEA test standard IOS-TM-0022.

According to the present invention this object is solved by a thermoplastic, unsaturated semi-crystalline polyester (A) with a Mp of 35°C or above comprising allyl functional groups in the polyester backbone according to formula 1

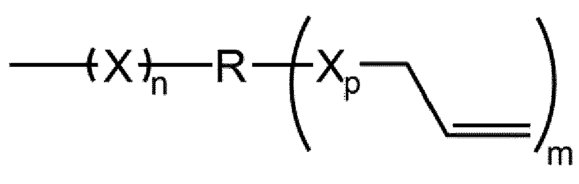

,

wherein X is selected from O, N, S and/or P, the value of n is 1 to 4, preferably 1 or 2, the value of p is 0 or 1, R is a substituted or unsubstituted aromatic, aliphatic or cycloaliphatic carbon chain with a number of carbon atoms from 0 to 10, preferably from 2 to 6 and m is at least 1, preferably between 1 and 3, said polyester (A) having a melt viscosity at 130 °C below 5 Pas, preferably below 3, more preferably below 1,5 Pas, the polyester (A) containing compounds supporting crystallinity wherein the mass fraction of compounds supporting crystallinity based on the mass of the polyester obtained from the synthesis is more than 70%, preferably more than 80%, more preferable more than 90% and most preferable more than 100%.Values of more than 100% can be obtained, as during the synthesis water and/or other

reaction byproducts can evaporate, thus leading to a lower amount of polyester obtained from the synthesis compared to the mass of educts used. Regarding the above-mentioned formula 1 it is to be understood that the shown carbon chain R carries on the one hand a number of m allyl groups, optionally via a connecting -X-, and is on the other hand connected via up to n groups - X- into one or more polyester chains of the backbone. The respective definitions of R, X, n, m and p are given above. Surprisingly it was found that with the object of the present invention a solid semi-crystalline allyl-functional polyester (A) can be provided, such a polyester has not been reported so far since only amorphous allylic polyesters were described or liquid polyesters containing allylic functionalities exhibiting crystalline structures. For the preparation of the semi-crystalline polyester (A) even allylic compounds which are not fostering a crystalline structure can be used, this provides a freedom for choosing the allylic compound which leads mainly to the one limitation that the allylic compound can be included in a polyester-backbone, for instance via alcohol, esters, anhydrides or acid groups.

According to a preferred embodiment of the present invention, the allyl groups in the allyl functional groups of formula 1 are linked to the carbon chain R via an oxygen atom, based on the structure $-(X)_n-R-(O-CH_2-CH=CH_2)_m$ with preferably n 1 or 2, R having 2 to 6 carbon atoms chain length and m ranging from 1 to 3.

It is also preferred, if the compounds supporting crystallinity are selected from the group comprising saturated and unsaturated, unbranched aliphatic, cycloaliphatic and aromatic alcohols, polyols, carboxylic acids, di- and polycarboxylic acids, anhydrides and derivatives thereof and compounds exhibiting more than one of the listed functional groups, wherein of cycloaliphatic and aromatic compounds the functional groups are preferably located opposite to each other for example in case of six-membered rings in para/1,4- position and in all cases the compounds supporting crystallinity contain no further substitution besides the above mentioned alcohol, anhydride or carboxylic groups or derivatives thereof. Surprisingly it was found that polyester composition comprising lower amounts of aromatic compound supporting crystallinity often resulted in superior coating properties.

Preferably the polyester (A) according to the present invention has a peak maximum of melt temperature measured by differential scanning calorimetry of between 70 °C and 130 °C, more preferably between 80 °C and 120 °C, most preferable between 90 °C and 110 °C determined via DSC.

According to a further preferred embodiment, the polyester (A) according to the present invention has a melt enthalpy measured via DSC of more than 30 J/g, preferably more than 40 J/g.

It is also advantageous, if the polyester (A) according to the present invention has a mass average molecular mass Mw between 2000 and 25000 g/mol, preferably between 4000 and 20000 g/mol.

According to another aspect, the present invention is directed to a process for the production of a polyester (A), wherein suitably substituted allyl functional compounds are incorporated in a polyester-backbone, leading to a structure according to formula 1, for instance via alcohol, esters, anhydride or acid substituents.

Preferably the polyester (A) according to the present invention is used in a binder system of a powder coating composition, even more preferably in a powder coating composition comprising at least one of such thermoplastic semi-crystalline polyester (A) and at least one thermoplastic amorphous polymer (B) comprising ethylenic unsaturations, wherein polymer (B) has a Tg of between 30 °C and 75 °C, and wherein the components of the composition soluble in organic solvents have a weight average molecular mass of between 2,000 g/mol and 20,000 g/mol, and wherein polyester (A) and polymer (B) are capable of copolymerzing with each other. According to the present invention such polyester (A) enables a powder coating system which can be cured at very low baking temperatures. In particular, temperature-sensitive substrates such as materials based on wood or plastics may be coated with a powder coating formulation containing polyester (A) of the invention at low baking temperatures and short baking times. Surprisingly, it has been found that such a powder coating formulation yields an optimum with respect to reactivity, in order to be able to coat heat-sensitive substrates and to achieve sufficient flowing/leveling of the coating, as well as to stability which is necessary for processing and storing the powder coating. This is realized by curing two binder components of very diverse properties which are copolymerizable with each other. By using the viscosity-lowering semi-crystalline allyl-functional polyester (A) combined with the second amorphous unsaturated polymer (B), a highly reactive coating with low curing times, already at low curing temperatures, and a good storage stability, good smoothness of the coatings, good film properties (resistance against cold liquids, flexibility of the coating) can be achieved. As polymer (B) also high Tgpolymers (with Tg's up to 75 °C) can be used, such polymers normally cause poor surface appearance and processing problems. Particularly in case of thermally induced curing it was surprisingly found that use of such compounds (B) together with the polyester (A) according to the present invention still allows high reactivity, a smooth surface appearance of the coating and a good levelling of the substrate. The high Tg of polymer (B) and the preferred lower limit of the peak maximum of melt temperature of 70 °C of polyester (A) ensure a good storage stability. The use of the polyester (A) of the present invention ensures a viscosity reduction as a result of the semi-crystalline structure of polyester (A), enabling processing of highly reactive coatings (even when a thermal initiator is present) and ensuring good flow and levelling, as well as high reactivity.

Furthermore, it is preferred if the weight per unsaturation (WPU) of polymer (B) is between 140 and 2,000 g/mol, more preferably between 200 and 1200 g/mol, most preferably between 300 and 800 g/mol.

It is also preferred if the WPU (weight per unsaturation) of polyester (A) is between 250 g/mol and 2000,

preferably between 400 and 1500, most preferably 400 and 800.

Restricting the WPU (weight per unsaturation) of compounds (A) and (B) to the preferred ranges mentioned above leads to an optimal cross-linking density of the powder coating wherein both stability and flexibility can be ensured, resulting in a superior resistance to cold liquids simultaneously with a good flexibility of the powder coating layer. Moreover, it was found that higher double bond equivalent weights give rise to an insufficient chemical resistance of the powder coatings to solvents and lower the reactivity of the formulation. Excessively high double bond equivalent weights lead to a reduced cross-linking density of the powder coating and to reduced mechanical and chemical stability. On the other side, excessively low double bond equivalent weights result in a very high cross-linking density and, thus, in an unsatisfactory flexibility of the coating. In addition, side reactions may increasingly occur particularly in the synthesis of polyesters with very low double bond equivalent weights. Without being bound by theory it is assumed that it increasingly comes to additions of alcohols onto the unsaturations of the polyester in these cases, known as "Ordelt saturation".

Another preferred embodiment of the powder coating formulation of the invention includes a thermal and/or UV initiation system, in which in case of the thermal initiation the temperature, at which the half-life of at least one thermal initiator is one minute (in the following called $T_{1/2}$), is from 80 to 150°C, preferably from 90 to 140°C, particularly preferably from 100 to 130°C.

In further preferred embodiments, the thermal initiation system addtionally contains an accelerator to lower the $T_{1/2}$, and/or an inhibitor to prevent a too early decomposition of the initiator and also too early cross-linking reactions of the binder. This means that thermal curing of the coating on heat-sensitive substrates is made possible by carefully selecting the components of the thermal initiation system, specifically with reference to the half life temperatures of the initiator and an optional addition of inhibitors and/or accelerators preventing a premature or too late initiator decomposition. Examples of suitable thermal iniators are azo initiators or peroxides, such as benzoyl peroxide, azobis (alkyl nitrile) peroxy compounds, peroxy ketals, such as 1,1-bis(t-butyl peroxy)-3,3,5-trimethylcyclohexane, peroxy esters, dialkylperoxides, hydroperoxides, ketone peroxides, etc.

In a particularly preferred embodiment, the powder coating formulation of the invention is characterized in that the thermal initiator includes a peroxide, preferably a dialkyl peroxide, a diacyl peroxide or a perester. Basically, other thermal initiators are possible as well. It is essential for the selection of the thermal initiator that the $T_{1/2}$ of the thermal initiator, which may optionally be adjusted by adding accelerators or inhibitors, is in a temperature range similar to the temperature at which the binder can be cross-linked.

Besides the $T_{1/2}$ mentioned before, the dosage of the peroxide is also of relevance. Excessively low peroxide doses may lead to insufficient cross-linking of the binder components, which in turn results in a poor swelling capacity and a deficient resistance to cold liquids. Excessively high peroxide concentrations, on the other hand, may result in pre-reactions during processing, storage problems, and odorous degradation products which may cause blooming. The required concentration of the peroxide depends on the chemical structure of the peroxide as well as on the presence of fillers or phlegmatizing agents. If employed, the amount of thermal initiator present usually ranges between about 0.1 and about 10 %, and preferably between about 1 and 5 %.

Further it is within the scope of the invention if the powder coating composition according to the present invention comprises besides or instead of the above-mentioned thermal initiator also a photoinitiator, preferably an UV initiator. Such initiators are compounds being capable of initiating a polymerization/crosslinking reaction via a generation of active species when exposed to radiation (such as UV or IR). Compounds that can be used are for instance aryl ketones, acyl phosphine oxides, or azo initiators.Further photoinitiators are for instance alpha cleavage photoinitiators including benzoin, benzoin ethers, benzyl ketals, such as benzyl dimethyl ketal, acyl phosphines, such as diphenyl (2,4,6-trimethyl benzoyl) phosphine oxide, aryl ketones, such as 1-hydroxy cyclohexyl phenyl ketone, Michler's ketone, diaryliodonium salts and copper synergists, etc. Usually the amount of photoinitiator present ranges between about 0.1 and 10 %, and preferably between about 1 and 5 %.

As mentioned above, either instead or in addition, thermal initiators, such as organic peroxide and azo compounds, in conjunction with the photoinitiators can also be employed. The presence of thermal initiators alongside photoinitiators has been found to assist in curing down near the substrate, particularly when pigmented, opaque, or thicker film coatings are desired.

In another preferred embodiment the powder coating composition might even not contain any initiator, especially if electron beam curing is used.

It was also surprisingly found that it is preferable for a powder coating composition containing the polyester (A) according to the present invention if the amount of the amorphous polymer (B) is between 20-90 % by weight, preferably between 40-75 % by weight, of the sum of (A) and (B). Surprisingly, by using the defined amount of the polyester (A) in combination with the thermoplastic amorphous polymer (B) comprising ethylenic unsaturations, a satisfactory flowing/leveling can be achieved, because, above the melting range of the said component (A), this results in a marked decline of the otherwise relatively high melting viscosity of the powder coating caused by the polymer (B).

According to a further preferred embodiment of the present invention it was found to be advantageous if in the powder coating composition the at least one thermoplastic amorphous polymer (B) does not contain or at least only low

concentrations of allyl functionalities. Surprisingly the powder coating composition of the present invention was found to be superior if the allyl group of polyester (A) does not react with an allyl group of the thermoplastic amorphous polymer (B) comprising ethylenic unsaturations.

The object of the present invention will now be explained in more detail referring to the following examples, wherein the powder coating formulation of the invention is not restricted to the specific compositions stated in the examples.

**Definitions**

Within the scope of the invention, the at least one thermoplastic, unsaturated semi-crystalline polyester (A) is understood to be a polyester according to claim 1 below including allyl groups which may subsequently undergo chemical reactions. The production of the polyester may be achieved by adequate processes, such as polycondensation of bi- or multifunctional organic acids and/or anhydrides, and bi- or multi-functional alcohols, or by transesterification of, for example, methyl esters of the bi- or multifunctional organic acids. The allyl compounds included into the synthesis must exhibit functional groups allowing an introduction into the polyester backbone, either directly during the synthesis of the polyester or via a subsequent modification of the polyester backbone. Functional groups allowing an introduction into the polyester backbone either during the synthesis or via a subsequent modification of an existing polyester backbone as known to someone skilled in the art, such as alcohol and/or acid functionalities and/or derivatives thereof.

"Substituted" means within this invention that at least one H-atom is replaced by another atom or chemical group commonly known as substituent(s).

The term "compound" as used in the present invention is used for a building block with functional groups allowing the introduction into a polyester chain, said compound might be a monomer, oligomer or polymer.

The term "polyester backbone" as used within this invention describes the main chain of a polymer containing ester-functionalities (-[-CO-O-]-).

The term "incorporated into a polyester backbone" within the present invention means that the compound being included into the polyester chain can either bei located at the ends or within the polymer chain via any suitable functionalities.

The viscosity of the unsaturated semi-crystalline polyester (A) was done with an Inula Cap 2000+ Viscometer at 130 °C, using spindle 6, 700 rpm, and and measurement time of 115 s. The number average molar mass is determined by gel permeation chromatography. As an eluent, chloroform was used at a flow rate of 1 ml/min. Calibration of the separation columns (three columns of 8 mm x 300 mm each, PSS SDV, 5 $\mu$m, 100, 1000 and 100000 A) was done by narrowly distributed polystyrene standards, and detection via refractive index detector.

Polymer (B) can be produced by radical polymerization, ionic polymerization, polyaddition, polycondensation or ring-opening polymerization or the like. It may be achieved in a way known to someone skilled in the art by polymerization of monomers containing ethylenic unsaturations and/or by chemical functionalization of polymers with compounds containing ethylenic unsaturations. Within the context of the present invention, the terms crystalline and semi-crystalline polyester are used synonymously, as there are no polymers with a 100% degree of crystallization. Unsaturated sites in the polymers may be achieved by using appropriate monomers, such as unsaturated alcohols or acids or derivatives thereof. Within the scope of the invention, monomers favoring crystallizaton are particularly suitable, such as symmetrical compounds or compounds favoring the formation of hydrogen bridge bonds. Within the scope of the invention, symmetrical compounds are those having at least one symmetrical axis. Preferably, compounds supporting a linear structure of the polymer with a very low tendency to form side chains are employed, for example linear unbranched bi-functional alcohols, acids or derivates thereof, having the functional groups opposite to each other. The polymers may also include aromatic or cycloaliphatic monomers. Examples of monomers which can be used in the production of for instance polyester (A) are terephthalic acid, isophthalic acid, ortho-phthalic acid, hexahydroterephthalic acid, tetrahydroterephthalic acid, benzoic acid, para-tert-butylbenzoic acid, cinnamic acid, crotonic acid, endomethylene tetrahydrophthalic acid, tetrachlorophthalic acid, 2,6-naphthalene dicarboxylic acid, 3,6-dichlorophthalic acid, cyclohexane dicarboxylic acid, adipic acid, succinic acid, nonanoic diacid, decanoic diacid, trimellitic acid, trimellitic acid anhydride, 4,4'-oxybis(benzoic acid), fumaric acid, maleic acid, maleic acid anhydride, itaconic acid, citraconic acid, mesaconic acid, neopentyl glycol, ethylene glycol, diethylene glycol, dipropylene glycol, 1,2-propanediol, 1,3-propanediol, 1,2-butanediol, 1,3-butanediol, 1,4-butanediol, 1,6-hexanediol, 2,5-hexanediol, 1,4-cyclohexane dimethanol, 2,2-bis[4-(2-hydroxyethoxy)phenyl]propane, 2,3-butenediol, glycerol, hexanetriol, trimethylolethane, trimethylolpropane, triethylene glycol, tetraethylene glycol, pentaethylene glycol, hexaethylene glycol, isosorbide, and pentaerythritol; however, other monomers may be used as well.

Within the scope of the invention, the at least one thermoplastic amorphous polymer (B) comprising ethylenic unsaturations can be produced by processes known to the person skilled in the art using appropriate unsaturated monomers.

Within the scope of the invention, both the melting point and the melting enthalpy of the polymers were determined by DSC measurements based on ISO 11357-3. The measurement was done using a heating rate of 20 K/min.

The values stated in this invention for melting point and melting enthalpy refer to the *Peak Melting Temperature* and the *Enthalpy of Melting* stated in the standard. For determining the maximum of the exothermic cross-linking reaction, $T_{cure}$, the same heating rate and the same temperature range are used. $T_{cure}$ is determined in the same way as the Peak Melting Temperature, but instead of the endothermic peak of melting the exothermic cross-linking peak is made use of. As particularly the melting enthalpy and the peak melting temperature may be mainly influenced by the pre-treatment, processing or, in other words, thermal history of the polymer, the first heating run of the DSC is used for a first assessment of the peak melting temperature. Afterwards, the polymer has to be cooled down to a temperature of 20 °C below the determined value and kept at this temperature for two hours. Afterwards, another DSC run can be started, whereby the starting temperature must be at least 50 °C lower than the melting temperature assessed in the first DSC run. Finally, the exact values of melting enthalpy, melting temperature, and maximum temperature of the curing reaction can be assessed in the second heating run. These values are displayed for the allyl functional polyesters in Table 1. As obvious to someone skilled in the art, it has to be ensured that no noticeable curing reaction took place in previous heating runs of DSC. Therefore, especially for DSC measurements powder coating formulations it might not be possible to heat the specimen 30 °C above the melting temperature (as suggested in ISO 11357-3) of the used polymers to erase the thermal history of the sample.

With a good flow or smooth surface appearance, coatings rated according to the PCI-smoothness scale with a value of at least sm1 are described.

The weights per unsaturation (WPU) of the polymers can be determined by an adequate method known to someone skilled in the art, such as NMR or titration with iodine.

The proportion of the polyester (A) is calculated from the employed quantity of the polyester of the invention, based on the total amount of the binding agent according to the following equation:

$$\text{Proportion of polyester [\%]} = \frac{100 \cdot m_{\text{polyesterA}}}{(m_{\text{polyesterA}} + m_{\text{polymerB}})}$$

Herein, m (polyester) refers to the mass of the one or more polyesters (A), whereas m (polymer) refers to the weighed portion of the one or more polymers (B). The proportion of polymer (B), based on the binding agent, is determined analogously:

$$\text{Proportion of polymer [\%]} = \frac{100 \cdot m_{polymerB}}{(m_{\text{polyesterA}} + m_{\text{polymerB}})}$$

In case the binding agent does not contain just one/more polyesters and just one/more polymers, then the sum of $(m_{\text{polyesterA}} + m_{\text{polymerB}})$ is to be understood as the sum of all binder components, i.e. the sum of all employed polymers.

The acid value (AV) is determined analogously to ONORM EN ISO 2114 with the difference that a mixture of 28 parts of acetone and 1 part of pyridine (% w/w) is used as a solvent. As a solvent for the partial acid value, a mixture of 2 parts of pyridine and 1 part of methanol is used.

The hydroxyl value (HV) is determined according to ONORM EN ISO 4629.

**Examples**

Polyesters (A) of the present invention were produced using the monomers according to Table 1 as follows:

Polyester (A) with allyl in one step (preferred embodiment; referred to as "one step" inTable 1)

All monomers and reactants are weighed in the reaction flask. The flask is purged with nitrogen gas. The mixture is heated up to 40°C, the MIBK is added using a dropping funnel. The mixture is heated up to 210-230 °C. The reaction water is collected and compared with the theoretical amount calculated from the resin formulation. When the reaction is completed and the resin is clear, a vacuum is applied (500+/-50 mbar). After 10 minutes the pressure is lowered to 300+/-50 mbar. All in all, the total time for vacuum application is 5 hours. Finally, the resin is discharged on aluminium plates, and cooled overnight.

Polyester (A) with allyl in two steps (referred to as "two steps" inTable 1)

All monomers and reactants are weighed in the reaction flask. The flask is purged with nitrogen gas. The mixture is heated up to 40°C, the MIBK is added using a dropping funnel. The mixture is heated up to 230 °C. The reaction water is collected and compared with the theoretical amount calculated from the resin formulation. When the reaction is completed and the resin is clear, a vacuum of 500+/-50 mbar is applied. After 10 minutes, it is raised to 300+/- 50 mbar and after 20 minutes to 200+/-50 mbar. The total vacuum time is 1 hour. Then, the resin is cooled down to 180 °C and the allyl is added slowly to the reaction flask within around 1,5 hours. After this step, the mixture is heated to up to 210°C to remove the residual water. Afterwards, a vacuum of 500/50 mbar is applied again for around two hours. Finally, the resin is discharged on aluminium plates, and cooled overnight.

Polymer (B)

In case that polymer (B) is a polyester and produced in-house, all monomers and reactants are weighed in the reaction flask. The flask is purged with nitrogen gas. The mixture is heated up to 40°C, the MIBK is added using a dropping funnel. The mixture is heated up to 225-242 °C. The reaction water is collected and compared with the theoretical amount calculated from the resin formulation. When the reaction is completed and the resin is clear, a vacuum of 500+/-50 mbar is applied. After 3.5 hours, the vacuum is raised to 300+/-50 mbar. The total vacuum time is around 4.5 hours.

In case of the semi-crystalline allyl functional polyesters (A), the theoretical weight per unsaturation is provided, which was calculated as the ratio of the total mass (in g, unless stated differently) of the polyester/polymer obtained from the synthesis and the quantity of substance (in mol, unless stated differently) of the unsaturated monomer used for the production or the sum of the quantities of substance of the unsaturated monomers used for the production. For the DAP resins used in examples 3 and 9, the double bond equivalent weight of the polymer was determined by calculating by means of the iodine number (provided in the datasheet from the suppliwer). The conversion is done according to the following equation:

$$\text{Weight per unsaturation} = \frac{\text{iodine number} \cdot \text{weighed portion of allyl prepolymer}}{\text{molar mass } (I_2)}$$

The quality of the surfaces, which were coated with the powder coating formulations of the invention was evaluated subject to various criteria as listed in the following.

The surface appearance was assessed according to the PCI Powder Coating Visual Smoothness Standards and PCI Powder Coating Visual Texture Standards. In Table , surfaces which were rated based on the PCI smoothness scale are labelled with "sm" plus the number of the corresponding standard and "tx" for the PCI texture scale respectively. The resistance to cold liquids was examined on the basis of ONORM EN 12720. The test liquids are coffee and ethanol (45% v/v), for one or six hours, respectively, paraffin and deionized water, for 24 h each. For the flexibility in the meaning of the invention, the so-called Ledro test according to IKEA specifikation IOS-TM-0022 is made use of, which is evaluating the long-term-crack resistance on the coated substrate.

Within the scope of the invention, an extrusion is judged to be successful if it proceeds without any noticeable pre-reactions in the extruder. Pre-reactions are recognized by a premature, at least partial polymerization of the powder coating. These pre-reactions take place when the temperature of the extrudate is too close to the temperature at which the half-life of the thermal initiator within the respective thermal initiation system is one minute. Experience has shown that this was the case at extrudate temperatures (measured at the exit of the extruder) starting from approx. $T_{1/2}$-10°C on, in some cases from $T_{1/2}$-20°C or $T_{1/2}$-30°C on.

Further, the processability was determined on the basis of any sticky residues during processing. This refers to the extrusion process, i. e. a sticking to the cooling unit (for example the cooling roll) of the extruder. This is recorded in the present invention as "sticking" in case of adhesions to the cooling roll or to the cooling belt, or is otherwise recorded as "no sticking". Herein, sticking is understood to be a phenomenon that needs additional mechanical impact for the formulation to be detached from the cooling unit.

The powder coating formulations according to Table 3 were electrostatically applied onto a medium density fibre board, reaching a film thickness of around 100 $\pm$ 20 $\mu$m. The powder coating formulations PC 1-PC 9 were thermally cured, using an IR oven. The substrate temperature and the residence time in the oven are listed in Table 3. In the case of PC 10, the powder coating was molten in an IR heating zone for around six minutes, reaching a maximum temperature of the substrate of around 140 °C. Subsequently, the curing was initiated with a mercury lamp, whereby the substrate temperature at the entry of the UV zone was around 120 °C. For PC 10, the DSC measurements additionally employ a

UV lamp (OMNICURE Series 2000), which was switched on at a temperature of 130 °C.

PE 1-2

These two examples are comparative examples, exhibiting a too low amount of compounds supporting a crystalline structure. Thus, the resins have an amorphous character, exhibiting no detectable or only very low melting enthalpies. Particularly for resin 2, only a glass transition temperature and no melting temperature could be detected.

PE 3-8

These examples are resins in accordance with the present invention. In particular resins 5-8 present preferred embodiments, prepared based on the preferred preparation procedure using a high amount of compounds supporting a crystalline structure, giving resins with a high degree of crystallinity.

PC 1

PC 1 is a comparative example using PE 1, which has a very low amount of compounds supporting crystallinity. The processing was not possible, as the extrudate sticked to the cooling roller and to the cooling belt. No extrudate was obtained which could be used for milling, application and curing.

PC 2-9

These examples are powder coatings in accordance with the present invention. In particular the formulations PC 7-9 present preferred embodiments, including a high amount of compounds supporting crystallinity in the polyester (A). Furthermore, in the formulations PC 7-9 polymer (B) does not contain allyl functionalities. In addition, PC 7-9 are optimized in terms of weight per unsaturations of polyester (A) and (B) as well as in terms of the amount of component B, leading to an optimized crosslinking density and thus to a superior resistance to cold liquids and performance in the Ledro test.

Table 1 Semi-crystalline allyl functional polyesters (A)

| | PE 1 | PE 2 | PE 3 | PE 4 | PE 5 | PE 6 | PE 7 | PE 8 |
|---|---|---|---|---|---|---|---|---|
| **1,4-Butanediol / %** | 28.3 | | 28.2 | 30 | 37.2 | 33 | 36.4 | 35.2 |
| **1,6-Hexanediol / %** | 4.1 | | 4.1 | | | | | |
| **2,2-Dimethyl-1,3-propanediol / %** | | 31.2 | | | | | | |
| **Trimethylol propane / %** | | | | | | | | |
| **Terephthalic acid / %** | | | 25.4 | | | | | |
| **Isophthalic acid / %** | 23.5 | 56.7 | | | | | | |
| **Adipic acid / %** | | 1.1 | | | | | | |
| **Succinic acid / %** | 25.7 | | 28.6 | 50.4 | 53.2 | 51.6 | 52.1 | 51.6 |
| **Trimethylol propane mono allyl ether / %** | | 10.1 | 13.7 | 19.8 | 9.7 | 15.5 | | |
| **Pentaerythritol allyl ether[1] / %** | 18.6 | | | | | | | |
| **2-(Allyloxy)ethanol / %** | | | | | | | 11.5 | 13.2 |
| **Mass fraction of compounds supporting crystallinity / %** | 66.4 | 1.3 | 100.2 | 94.6 | 107.4 | 100.0 | 118.5 | 118.3 |
| **Calculated weight per unsaturation** | 1610 | 1502 | 1090 | 750 | 1503 | 951 | 751 | 650 |
| **Acid number** | 5.1 | 8.8 | 20.9 | 6.6 | 7.2 | 7.8 | 4.7 | 6.5 |
| **Hydroxyl number** | 27 | 26.3 | 42 | 25.6 | 19.4 | 23.1 | 17.4 | 19.4 |
| **Visc. 130°C 700 rpm [Pas]** | 0.4 | 1.6 | 0.4 | 0.6 | 1.1 | 0.7 | < 0,2[2] | < 0.3[2] |
| **Tm [°C]** | 55.4 | 48.9[3] | 53.7 | 83.1 | 103.1 | 90 | 109.3 | 105.1 |
| **ΔHm** | 14 | | 24 | 37 | 59 | 48 | 71 | 78 |
| **Synthesis** | one step | one step | two steps | one step | one step | one step | one step | one step |
| **Mass average molecular mass Mw / Da** | 16500 | 14100 | 9170 | 14700 | 16000 | 16800 | 7680 | 8490 |

[1] mixture of different monomers exhibiting different numbers of allyl groups (CAS 91648-24-7); supplied by Sigma-Aldrich Handels GmbH, Vienna, Austria

[2] measured with a different set-up (viscosimeter AR2000 Ex with the plate 543334.901

[3] Tg instead of a melting point, as the polymer does not contain a crystalline part

Table 2 Thermoplastic, amorphous, ethylenic unsaturated component (B)

| No. | PE 2 | PE 9 | PE 10 | DAP iso[1] | DAP K[1] |
|---|---|---|---|---|---|
| Fumaric acid / % | See Table 1; the polyester does not exhibit a crystalline structure and can thus be used as polymer (B) | 18.2 | 13.2 | | |
| Terephthalic acid / % | | 6.7 | 13.1 | | |
| Isophthalic acid / % | | 31 | 30.5 | | |
| Neopentyl glycol / % | | 43.8 | 43 | | |
| Mono butyl tin oxide / % | | 1.33 | 1.33 | | |
| Weight per unsaturation | | 541 | 750 | 341 | 337 |
| Acid number | | 4.6 | 4.8 | | |
| Hydroxyl number | | 34.2 | 32.9 | | |
| Tg/°C | | 41.5 | 43.2 | 41.6 | 72.8 |
| Prepolymer based on Diallylphthalate, OSAKA SODA CO., LTD., Osaka, Japan | | | | | |

*Table 3 Powder coating compositions*

| No | PC 1 | PC 2 | PC 3 | PC 4 | PC 5 | PC 6 | PC 7 | PC 8 | PC 9 |
|---|---|---|---|---|---|---|---|---|---|
| PE 1 (A) | 55.3 | | | | | | | | |
| PE 6 (A) | | | | | 42.7 | | | | |
| PE 5 (A) | | 49.3 | | | | | | | |
| PE 4 (A) | | | | | | 33.5 | | | |
| PE 7 (A) | | | 46.1 | 46.2 | | | 25.1 | | |
| PE 8 (A) | | | | | | | | 23.3 | 52.0 |
| PE 2 (B) | | | | | | | 11.2 | 11.2 | |
| PE 9 (B) | 11.7 | 17.7 | | | 24.3 | | | | 43.2 |
| DAP iso (B) | | | 20.9 | | | | | | |
| PE 10 (B) | | | | | | 33.5 | 30.7 | 32.5 | |
| DAP K (B) | | | | 20.8 | | | | | |
| Modaflow 6000[1] | 1.3 | 1.3 | 1.3 | 1.3 | 1.3 | 1.3 | 1.3 | 1.3 | 1.3 |
| TITAN TR 81[2] | 28.4 | 28.4 | 28.4 | 28.4 | 28.4 | 28.4 | 28.4 | 28.4 | |
| Benox A 75[3] | 3.3 | 3.3 | 3.3 | 3.3 | 3.3 | 3.3 | 3.3 | 3.3 | |
| Powdermate 542[4] | | | | | | | | | 0.5 |
| Irgacure 819[5] | | | | | | | | | 1.5 |
| Irgacure 2959[6] | | | | | | | | | 1.5 |
| w% B/total | 11.7 | 17.7 | 20.9 | 20.8 | 24.3 | 33.5 | 41.9 | 43.7 | 43.2 |
| w% B/binder | 17.5 | 26.5 | 31.2 | 31.0 | 36.3 | 50.0 | 62.5 | 65.2 | 45.4 |
| Processing | not possible | slightly sticking to cooling roller | good | good | slightly sticking to cooling roller and cooling belt | slightly sticking to cooling roller | good | good | slightly sticking to mill |
| Tpm | - | 97 | 106 | 106 | 85 | 78 | 107 | 104 | 105 |
| ΔHm | - | 38 | 50 | 51 | 28 | 29 | 38 | 36 | 40 |
| Tcure | - | 134 | 134 | 133 | 137 | 137 | 139 | 139 | -[7] |
| Curing condition | - | thermal; 130 °C, 3' | thermal; 135°C, 5' | thermal; 135°C, 5' | thermal; 140 °C, 3' | thermal; 140 °C, 3' | thermal; 140 °C, 3' | thermal; 130 °C, 3' | UV |
| Surface8 | - | sm2 | tx3 | sm2 | tx1 | tx1 | sm2 | sm4 | sm9 |
| Coffee 1 h | - | 4 | 4 | 4 | 5 | 4 | 5 | 5 | 5 |
| Coffee 6 h | - | 2 | 3 | 3 | 4 | 3 | 5 | 4 | 5 |
| Ethanol 1h | - | 4 | 5 | 5 | 5 | 5 | 4 | 5 | 5 |
| Ethnaol 6 h | - | 4 | 5 | 5 | 5 | 5 | 5 | 5 | 4 |
| Water 24 h | - | 5 | 5 | 5 | 5 | 5 | 5 | 5 | 5 |
| Paraffine 24 h | - | 5 | 5 | 5 | 5 | 5 | 5 | 5 | 5 |
| Ledro test | - | 48 | 2 | 2 | 48 | 48 | 48 | 48 | -[8] |

[1] Flow Agent, Allnex Holding S.à r.l., Luxemburg, Luxemburg

[2] Titanium dioxide, Huntsman corporation, Salt Lake City, USA

[3] Dibenzoylperoxide, United Initators GmbH, Duisburg, Germany

[4] Degassing Agent, Troy Corporation, Florham Park, USA

[5] Bis(2,4,6-trimethylbenzoyl)-phenylphosphineoxide, BASF Schweiz AG, Basel, Switzerland

[6] 1-[4-(2-Hydroxyethoxy)-phenyl]-2-hydroxy-2-methyl-1-propane-1-one, BASF Schweiz AG, Basel, Switzerland

[7] not applicable for UV curing, as the UV curing is not initiated via temperature, but via a seperate activation of the UV lamp

[8] not tested

## Claims

1. Thermoplastic, unsaturated semi-crystalline polyester (A) with a Mp of 35°C or above comprising allyl functional groups of formula 1

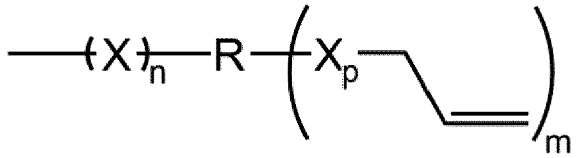
,

wherein X is selected from O, N, S and/or P, the value of n is 1 to 4, preferably 1 or 2, the value of p is 0 or 1, R is a substituted or unsubstituted aromatic, aliphatic or cycloaliphatic carbon chain with a number of carbon atoms from 0 to 10, preferably from 2 to 6, and m is at least 1, preferably between 1 and 3, said polyester (A) having a melt viscosity at 130°C below 5 Pas, preferably below 3, more preferably below 1,5 Pas, the polyester (A) containing compounds supporting crystallinity wherein the mass fraction of compounds supporting crystallinity based on the mass of the polyester obtained from the synthesis
is more than 70%, preferably more than 80%, more preferable more than 90% and most preferably more than 100%.

2. Polyester (A) according to claim 1, wherein the allyl groups in the allyl functional groups of formula 1 are linked to the carbon chain R via an oxygen atom, based on the structure $-(X)_n-R-(O-CH_2-CH=CH_2)_m$ with preferably n 1 or 2, R having 2 to 6 carbon atoms chain length and m ranging from 1 to 3.

3. Polyester (A) according to claim 1 or 2, wherein the compounds supporting crystallinity are selected from the group comprising saturated and unsaturated, unbranched aliphatic, cycloaliphatic and aromatic alcohols, polyols, carboxylic acids, di- and polycarboxylic acids, anhydrides and derivatives thereof and compounds exhibiting more than one of the listed functional groups, wherein of cycloaliphatic and aromatic compounds the functional groups are preferably located opposite to each other for example in case of six-membered rings in para/1,4- position and in all cases the compounds supporting crystallinity contain no further substitution besides the above mentioned alcohol, anhydride or carboxylic groups or derivatives thereof.

4. Polyester (A) according to any of the preceding claims with a peak maximum of melt temperature measured by differential scanning calorimetry of between 70 °C and 130 °C, more preferably between 80 °C and 120 °C, most preferable between 90 °C and 110 °C determined via DSC.

5. Polyester (A) according to any of the preceding claims with a melt enthalpy measured via DSC of more than 30 J/g, preferably more than 40 J/g.

6. Polyester (A) according to any of the preceding claims with a mass average molecular mass Mw between 2000 and 25000 g/mol, preferably between 4000 and 20000 g/mol.

7. Process for the production of a polyester (A) according to any of the preceding claims, wherein suitably substituted allyl functional compounds are incorporated in a polyester-backbone, leading to a structure according to formula 1, for instance via alcohol, esters, anhydride or acid substituents.

8. Use of a polyester according to any of claims 1 to 6 in a binder system of a powder coating composition.

9. Powder coating composition comprising at least one thermoplastic semi-crystalline polyester (A) according to any of claims 1 to 6 and at least one thermoplastic amorphous polymer (B) comprising ethylenic unsaturations, wherein polymer (B) has a Tg of between 30 °C and 75 °C, and wherein the components of the composition soluble in organic solvents have a weight average molecular mass of between 2,000 g/mol and 20,000 g/mol, and wherein polyester (A) and polymer (B) can copolymerize with each other.

10. Powder coating composition according to claim 9, wherein the weight per unsaturation (WPU) of polymer (B) is between 140 and 2,000 g/mol, more preferably between 200 and 1200 g/mol, most preferably between 300 and 800 g/mol.

**11.** Powder coating composition according to claims 9 or 10, wherein the WPU (weight per unsaturation) of Polyester (A) is between 250 g/mol and 2000, preferably between 400 and 1500, most preferably 400 and 800.

**12.** Powder coating composition according to any of claims 9 to 11, further comprising a thermal and/or photoinitiator.

**13.** Powder coating composition according to any of claims 9 to 11, wherein polymers (A) and (B) can copolymerize with each other when electron-beam irradiated.

**14.** Powder coating composition according to any of claims 9 to 13, wherein the amount of the amorphous polymer (B) is between 20-90 % by weight, preferably between 40-75 % by weight of the sum of (A) and (B).

**15.** Powder coating composition according to any of claims 9 to 14, wherein the at least one thermoplastic amorphous polymer (B) does not contain allyl functionalities.

Europäisches Patentamt
European Patent Office
Office européen des brevets

# EUROPEAN SEARCH REPORT

Application Number
EP 18 15 2573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2018/015530 A1 (TIGER COATINGS GMBH & CO KG [AT]) 25 January 2018 (2018-01-25)<br>* tables 2, 5 *<br>* examples 17, 18; table 4 *<br>----- | 1-14 | INV.<br>C09D5/03<br>C08G63/21<br>C08G63/52<br>C08G63/676<br>C08G63/685<br>C08G63/688<br>C08G63/692<br>C08G63/78<br>C09D167/06<br>C09D167/07 |
| X,D | WO 93/19132 A2 (DSM NV [NL])<br>30 September 1993 (1993-09-30)<br>* example B *<br>* examples I, II *<br>* claims 1-10 *<br>----- | 1-15 | |
| X | WO 97/23539 A1 (PERSTORP AB [SE]; PETTERSSON BO [SE])<br>3 July 1997 (1997-07-03)<br>* example 3 *<br>* claims 1-34 *<br>----- | 1-7 | |
| A,D | EP 0 844 286 A1 (MORTON INT INC [US])<br>27 May 1998 (1998-05-27)<br>* claims 1-20 *<br>* examples 1-7 *<br>----- | 1-15 | TECHNICAL FIELDS SEARCHED (IPC) |
| A | US 2002/183416 A1 (DALY ANDREW THOMAS [US] ET AL) 5 December 2002 (2002-12-05)<br>* examples 1-4 *<br>* claims 1-10 *<br>----- | 1-15 | C09D<br>C08G |

The present search report has been drawn up for all claims

1

| Place of search | Date of completion of the search | Examiner |
|---|---|---|
| The Hague | 12 June 2018 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 15 2573

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2018

| Patent document cited in search report | Publication date | Patent family member(s) | Publication date |
|---|---|---|---|
| WO 2018015530 A1 | 25-01-2018 | EP 3272779 A1 | 24-01-2018 |
| | | WO 2018015530 A1 | 25-01-2018 |
| WO 9319132 A2 | 30-09-1993 | AU 3749993 A | 21-10-1993 |
| | | CN 1076464 A | 22-09-1993 |
| | | EP 0631591 A1 | 04-01-1995 |
| | | FI 944302 A | 16-09-1994 |
| | | NL 9200506 A | 18-10-1993 |
| | | NO 943452 A | 17-11-1994 |
| | | US 5763099 A | 09-06-1998 |
| | | WO 9319132 A2 | 30-09-1993 |
| WO 9723539 A1 | 03-07-1997 | AT 218149 T | 15-06-2002 |
| | | AT 224924 T | 15-10-2002 |
| | | AU 1219197 A | 17-07-1997 |
| | | AU 1219297 A | 17-07-1997 |
| | | DE 69621454 D1 | 04-07-2002 |
| | | DE 69621454 T2 | 12-12-2002 |
| | | DE 69623990 D1 | 31-10-2002 |
| | | DE 69623990 T2 | 05-06-2003 |
| | | DK 0869984 T3 | 27-01-2003 |
| | | EP 0869983 A1 | 14-10-1998 |
| | | EP 0869984 A1 | 14-10-1998 |
| | | US 5990260 A | 23-11-1999 |
| | | WO 9723538 A1 | 03-07-1997 |
| | | WO 9723539 A1 | 03-07-1997 |
| EP 0844286 A1 | 27-05-1998 | AT 224934 T | 15-10-2002 |
| | | CA 2225512 A1 | 26-06-1998 |
| | | DE 69715781 D1 | 31-10-2002 |
| | | DE 69715781 T2 | 14-08-2003 |
| | | EP 0844286 A1 | 27-05-1998 |
| | | ES 2186846 T3 | 16-05-2003 |
| | | US 5922473 A | 13-07-1999 |
| | | US 6005017 A | 21-12-1999 |
| | | US 6017640 A | 25-01-2000 |
| US 2002183416 A1 | 05-12-2002 | EP 1327669 A1 | 16-07-2003 |
| | | US 2002183416 A1 | 05-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2342286 B1
- WO 2010052290 A1
- EP 2342287 A1
- WO 2014173861 A
- WO 1993019132 A
- EP 0309088 B1
- EP 1043138 A1
- US 3331891 A
- EP 0844286 A1
- EP 0980901 A2
- EP 1538186 A1
- EP 0957141 B1
- WO 2015158587 A
- CN 102884132 A
- EP 2566923 A1